# FASCICULE DE BREVET EUROPEEN

(11) **EP 1 118 427 B1**
(45) Date de publication et mention de la délivrance du brevet: **06.10.2004**
(21) Numéro de dépôt: 00204371.9
(22) Date de dépôt: 07.12.2000
(51) Int. Cl.: B23Q 11/08, F16P 3/02

(54) **Dispositif de protection des moyens d'entraînement et de guidage d'un organe mobile d'une machine-outil contre les projections de copeaux**
Vorrichtung zum Schutz des Antriebs- und Führungsmittels eines mobilen Teiles einer Werkzeugmaschine vor Spänen
Device for protecting the drive and guidance means of a moveable part of a machine tool from swarf

(30) Priorité: 13.12.1999 FR 9915647
(43) Date de publication de la demande: 25.07.2001
(73) Titulaire: Comau Systèmès France, 78191 Trappes cedex (FR)
(72) Inventeur: Cahuzac, Daniel, 81120 Realmont (FR)
(74) Mandataire: Richebourg, Michel François

(56) Documents cités:
- CH-A- 436 915
- FR-A- 2 742 519
- US-A- 4 385 539
- US-A- 5 688 084
- PLEKHANOV I F: "A DEVICE FOR SEALING THE WORK CHAMBER IN ELECTROCHEMICAL MACHINES" SOVIET ENGINEERING RESEARCH. (STANKI I INSTRUMENTY & VESTNIK MASHINOSTROENIA MASHINOSTROCNIE),US,ALLERTON PRESS, NEW YORK, vol. 8, no. 6, 1988, pages 96-98, XP000113464

## Description

La présente invention a trait au domaine des machines-outils d'usinage et notamment aux adaptations permettant de protéger dans les meilleures conditions les moyens d'entraînement et de guidage d'un organe mobile de machine-outil.

Il existe dans l'art antérieur une pluralité de dispositifs et écrans assurant la protection contre la projection des copeaux provoquée par une opération d'usinage quelconque qu'elle soit de tournage, de fraisage, de rectification, etc....

La demanderesse a mené des recherches sur un dispositif de protection de copeaux s'adaptant sur un type particulier de machine-outil assurant l'usinage des vilebrequins. Les dispositions des différentes parties de cette machine et notamment des organes d'entraînement des outils ont déterminé un cahier des charges auquel aucun des dispositifs de l'art antérieur n'a pu répondre correctement.

En effet, les dispositifs de l'art antérieur, et notamment les dispositifs télescopiques, ont pour caractéristiques de comporter des éléments fixes de part et d'autre de la zone à protéger, ces éléments fixes nécessitant un encombrement minimum pour permettre leur installation.

De même, les dispositifs suivant un organe mobile selon un axe de déplacement constitué d'un tablier rigide s'enroulant et se déroulant autour de deux rouleaux disposés de part et d'autre de l'organe mobile, requièrent un emplacement pour disposer lesdits rouleaux dont les dimensions peuvent varier.

Un des buts de l'invention est de fournir un dispositif proposant une protection efficace pour un encombrement minimum.

Le type de machine-outil auquel doit s'adapter le dispositif de protection ne comporte pas l'espace nécessaire au montage des dispositifs de protection classiques du fait que jusqu'à aujourd'hui la protection contre la projection des copeaux ainsi que leur évacuation étaient assurées par des jets de liquide de coupe ou autre, solution technique qui, à terme, devrait disparaître du fait de la mise en place des nouvelles normes européennes sur le respect de l'environnement, pour laisser la place à des dispositifs prenant en compte l'usinage à sec.

Les recherches menées par la demanderesse sur une application particulière ont abouti à la conception originale d'un dispositif de protection contre la projection des copeaux, nouveau et inventif permettant :
- de protéger contre la projection des copeaux dans des conditions optimales,
- de respecter le cahier des charges tel qu'établi,
- mais aussi d'autoriser son adaptation sur tout dispositif dont les moyens d'entraînement et de guidage de l'organe mobile sont à protéger.

Selon la caractéristique principale de l'invention, le dispositif de protection des moyens d'entraînement d'un organe mobile centre la projection des copeaux d'une machine-outil d'usinage comportant une zone d'entraînement et une zone d'usinage est du type de celui définissant une paroi de protection qui, solidaire de l'organe mobile et traversée par ce dernier, sépare la zone d'entraînement de la zone d'usinage. Ce dispositif est remarquable en ce qu'il est constitué par un tablier solidaire de la partie traversante de l'organe mobile et se déplaçant en libre translation sur un disque en libre rotation par rapport à une cabine et dont l'axe de rotation est décalé par rapport à l'axe de déplacement dudit organe mobile pour lequel sont ménagées dans le disque, une première fenêtre de déplacement, et dans la cabine une deuxième fenêtre de déplacement. Ces deux fenêtres de déplacement sont disposées l'une par rapport à l'autre de telle façon que le déplacement de l'organe mobile dans ladite deuxième fenêtre selon un plan perpendiculaire à l'axe de rotation du disque provoque simultanément le coulissement dudit tablier sur le disque et la rotation de ce dernier, de sorte que ledit déplacement en translation du tablier et la rotation du disque obturent l'ouverture des deux fenêtres de déplacement.

L'utilisation d'un disque est particulièrement avantageuse en ce qu'elle évite de disposer d'un espace de déplacement de l'écran de proctection de part et d'autre de la surface réelle à protéger comme par exemple, les dispositifs télescopiques nécessitant une partie fixe ou du moins une largeur minimum fixe permettant la disposition d'un élément mobile de la structure télescopique. Il en est de même avec les tabliers s'enroulant ou se déroulant autour de rouleaux de part et d'autre de la zone à protéger. La géométrie du cercle est donc particulièrement avantageuse en ce qui concerne l'encombrement d'un tel dispositif de protection. Il permet donc de s'adapter aux dispositifs ou machines-outils n'ayant pas prévu dans leur conception initiale, l'encombrement nécessaire à l'installation d'un dispositif de protection contre la projection des copeaux tout en proposant un dispositif de protection optimal autorisant les mouvements de l'organe mobile qui le traverse et entraîne ses différents composants.

Un autre avantage lié à un tel dispositif réside dans la simplicité non seulement de sa cinématique mais aussi des éléments le constituant ce qui permet d'envisager une réalisation à un faible coût, souci constant de la demanderesse.

En effet, la cinématique mise en oeuvre dans un tel dispositif est assurée par une liaison glissière se déplaçant sur un plan en liaison pivot. Aucun entraînement annexe n'est nécessaire car les mouvements du tablier et du disque sont assurés par les mouvements de l'organe mobile dans un plan perpendiculaire à l'axe de rotation du disque, le tablier et le disque sont en libre mouvement.

Les éléments constituant le dispositif de protection sont réduits à leur plus simple expression du fait même de la simplicité du concept mis en oeuvre. La fenêtre de déplacement ménagée dans la cabine doit être couverte par le disque et le tablier coulissant au-dessus, et la fenêtre de déplacement ménagée dans le disque doit être couverte par le tablier solidaire et traversé par ledit organe mobile.

L'organe mobile, dont les moyens d'entraînement et de guidage ou tout autre moyen constitutif d'une machine-outil sensible à la projection des copeaux, peut bien entendu être constitué entre autres par un coulant porte-outil ou un module de serrage d'une pièce à usiner.

Les concepts fondamentaux de l'invention venant d'être exposés ci-dessus dans leur forme la plus élémentaire, autres détails et caractéristiques ressortiront plus clairement à la lecture de la description qui suit donnant, à titre d'exemple non limitatif et en regard des dessins annexés, un mode de réalisation d'un dispositif de protection des moyens d'entraînement et de guidage d'un organe mobile d'une machine-outil d'usinage contre la projection des copeaux conforme à l'invention. Cette description se réfère aux dessins annexés sur lesquels :
La figure 1a est une vue schématique de face d'un dispositif de protection conforme à l'invention,
La figure 1b est une vue schématique de face du dispositif de protection de la figure la avec l'organe mobile en fin de course,
La figure 2 est une vue schématique d'ensemble en perspective isométrique du dispositif de protection.

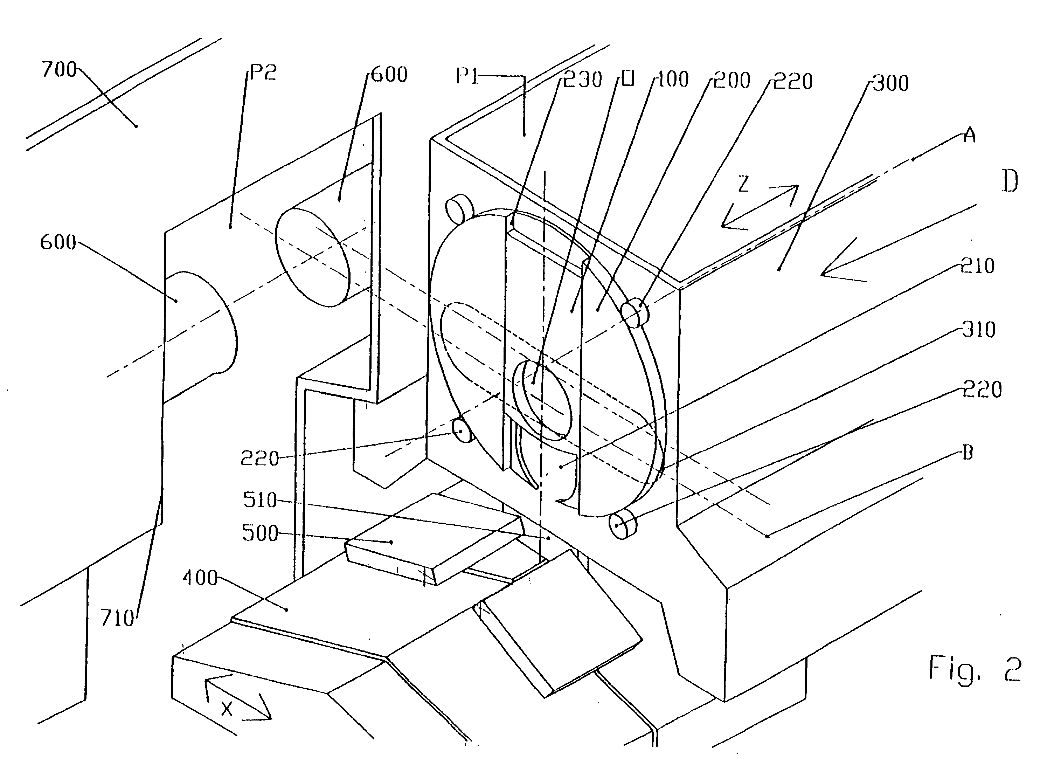

Tel qu'illustré sur le dessin de la figure 2, le dispositif de protection référencé D dans son ensemble protège contre la projection des copeaux d'une machine-outil d'usinage, les moyens d'entraînement d'un organe mobile O situés dans une partie dite d'entraînement P1. L'organe mobile O comporte, entraîné en rotation à son extrémité, un outil (non illustré) qui vient assurer les opérations d'usinage dans une partie dite d'usinage P2. Comme illustré, le dispositif de protection D est du type de celui définissant une paroi de protection qui, solidaire de l'organe mobile O et traversée par ce dernier, sépare la partie entraînement P1 de la partie usinage P2.

Dans le mode de réalisation préféré illustré, l'organe mobile O est constitué par un coulant porte-outil traversant ledit dispositif de protection D. Ledit dispositif de protection D est avantageusement constitué par un tablier 100 solidaire de la partie traversante de l'organe mobile O et se déplacant en libre translation sur un disque 200 en libre rotation par rapport à une cabine 300 et dont l'axe de rotation A est décalé par rapport à l'axe de déplacement B dudit organe mobile O pour lequel sont ménagées :
- dans le disque 200, une première fenêtre de déplacement 210;
- et dans la cabine 300 une deuxième fenêtre de déplacement 310,
les deux fenêtres de déplacement 210 et 310 étant disposées l'une par rapport à l'autre de telle façon que le déplacement de l'organe mobile O dans ladite deuxième fenêtre 310, selon un plan perpendiculaire à l'axe de rotation A du disque 200, provoque simultanément le coulissement dudit tablier 100 sur le disque 200 et la rotation de ce dernier, de sorte que ledit déplacement en translation du tablier 100 et la rotation du disque 200 obturent l'ouverture des deux fenêtres de déplacement 210 et 310.

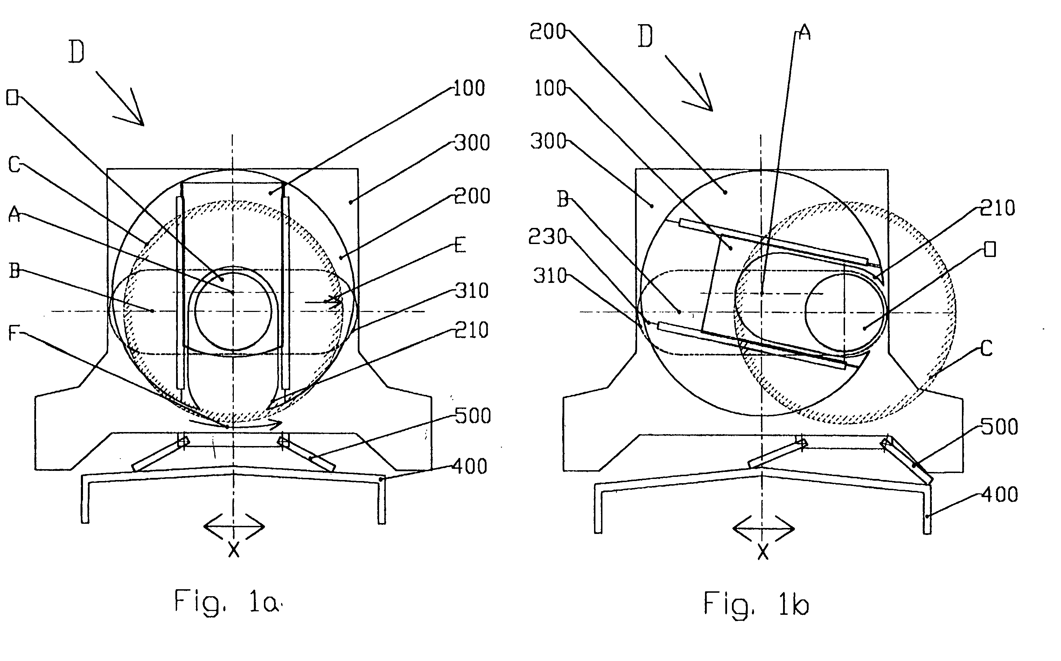

Le fonctionnement et le mouvement des pièces constituant ledit dispositif de protection D, les unes par rapport aux autres est illustré plus en détail sur les dessins des figures 1a et 1b.

Comme illustré sur la figure la, le dispositif de protection D adopte une position de départ dans laquelle l'axe de symétrie du tablier 100 est perpendiculaire à l'axe de symétrie de la fenêtre de déplacement 310 de l'organe mobile O en bout duquel se trouve entraîné en rotation un outil rotatif C. Cette position de départ permet à l'organe mobile O de se déplacer le long de la fenêtre de déplacement 310 ménagée dans la cabine 300 de part et d'autre dudit axe de symétrie du tablier 100 en mettant en mouvement ledit tablier 100 le long de la rainure prévue à cet effet et ménagée dans le disque 200, ledit mouvement en translation assurant la rotation dudit disque 200 du fait du décalage entre l'axe de déplacement de l'organe mobile O perpendiculaire à l'axe de rotation dudit disque 200 et ledit axe de rotation du disque 200.

Comme illustrée sur les dessins des figures la et 1b, la translation de l'organe mobile O matérialisée par la flèche E, en bout duquel se trouve entraîné en rotation un outil C à l'intérieur de la fenêtre de déplacement 310 d'une position située au centre de ladite fenêtre de déplacement à une position selon la flèche E située à l'extrême droite de la fenêtre de déplacement 310, provoque la translation du tablier 100 sur le disque 200 et la rotation dudit disque 200 selon la flèche F.

L'empilement, l'agencement et les dimensions des différentes parois verticales du tablier 100 du disque 200 et de la cabine 300 par rapport aux fenêtres de déplacement 210 et 310 sont tels que, comme illustrée dans sa position intermédiaire sur le dessin de la figure la, la partie de la fenêtre de déplacement 210 ménagée dans le disque 200 non recouverte par le tablier 100 est obturée par la surface verticale de la cabine 300. De même, toujours dans cette position, la fenêtre de déplacement 310 ménagée dans la cabine 300, est recouverte par le disque 200 sur ses extrémités et par le tablier 100 traversé par l'organe mobile O sur sa partie centrale.

Comme illustré sur le dessin de la figure la, le déplacement de l'organe mobile selon la flèche E provoque le coulissement du tablier 100 et la rotation du disque 200 ce qui permet d'obturer les ouvertures 210 et 310 créées par rapport à la position de départ illustrée sur le dessin de la figure la dans les fenêtres 310 et 210.

Selon un mode de réalisation particulièrement avantageux, illustré plus en détails sur le dessin de la figure 2, le susdit disque 200 est guidé en rotation au moyen de galets 220, dont les axes de rotation sont parallèles à l'axe de rotation dudit disque 200 et solidaires à la cabine 300. Cette solution technologique est particulièrement simple pour l'élaboration d'une liaison pivot libre dudit disque 200. Bien que le dessin illustre la présence de quatre galets 220 de guidage en rotation, la demanderesse ne veut pas se limiter sur le nombre de galets utilisés pour une telle application.

Ledit disque 200 est aménagé d'une rainure 230 d'une largeur telle qu'elle accueille le tablier 100, les flans de ladite rainure 230 venant guider le tablier 100, ledit disque 200 comportant des moyens assurant le maintien dudit tablier 100 dans ladite rainure 230, le diamètre dudit disque 200 définissant les fins de courses du tablier 100.

Selon un mode préféré mais non limitatif de réalisation, le dispositif D est remarquable en ce que l'ensemble constitué par l'organe mobile O et le dispositif de protection D sont solidaires cinématiquement selon un premier axe de déplacement Z. Toujours selon ce mode de réalisation, le dispositif D est remarquable en ce que seul l'organe mobile O se déplace selon le deuxième axe de déplacement X par rapport à la cabine 300 actionnant par ce mouvement le dispositif de protection D.

Selon le mode de réalisation préféré illustré, les moyens de guidage de l'ensemble constitué par l'organe mobile O et par le dispositif de protection D sont protégés par une structure télescopique 400 formant des parois de toit dont le faîte est parallèle à l'axe de déplacement dudit ensemble.

Selon une caractéristique particulièrement avantageuse de l'invention, au moins un module racleur 500 assurant l'évacuation des copeaux déposés sur la structure télescopique 400 est lié aux mouvements de déplacement en translation de l'organe mobile O selon l'axe X, perpendiculaires aux mouvements de translation selon l'axe Z de l'ensemble du dispositif de protection D de façon à entraîner les copeaux sur les pentes du toit formé par ladite structure télescopique 400.

Selon le mode préféré mais non limitatif de réalisation illustré, ledit dispositif D est remarquable en ce qu'il comporte deux modules racleurs 500 disposés de part et d'autre du plan de symétrie passant par le faîte de ladite structure télescopique en toit 400 dont une première extrémité est en contact avec cette dernière 400 et dont une deuxième extrémité est montée pivotante par rapport à une platine 510 fixée à l'organe mobile O de façon à ce que le poids de chaque module racleur 500 maintienne constant le contact de ce dernier avec la pente du toit du côté de laquelle il est situé et de façon à ce que le module racleur 500 s'adapte à la pente du toit 400 quelle que soit la course de l'organe mobile O et/ou de l'ensemble constitué par l'organe mobile O avec le dispositif de protection D qui fait évoluer la structure télescopique 400 en réalisant une translation selon l'axe Z.

Cette caractéristique est illustrée sur les dessins des figures la et 1b dans lesquels, les deux modules racleurs 500 pivotant à une de leur extrémité par rapport à une platine 510 se déplacent suivant la flèche de déplacement E avec l'organe mobile O. Comme illustré sur le dessin de la figure 1b, du fait de leur liaison pivot les deux organes racleurs 500 restent en contact avec les pentes du toit de la structure télescopique 400 de façon à ce que leurs extrémités entraînent les copeaux tombés sur lesdites pentes vers les zones de récupération de copeaux vers lesquelles s'orientent lesdites pentes. La demanderesse a donc avantageusement associé un des mouvements de l'organe mobile O à des modules permettant le nettoyage du dispositif de protection des organes de guidage correspondant à un mouvement perpendiculaire audit mouvement de l'organe mobile.

Selon une application particulière, le dispositif de protection protège les organes de guidage et d'entraînaient d'un poste d'usinage du type de celui comportant au moins un organe mobile O porte-outil C se déplaçant sur deux axes perpendiculaires (Z et X) en situé entre deux stations porte-pièce assurant l'entraînement en rotation et/ou la tenue de deux pièces disposées parallèlement en amont et en aval de l'organe mobile O, de telle sorte que l'outil C entraîné en rotation par l'organe mobile O suive un mouvement en translation en va-et-vient (axe X) d'une station porte-pièce à une autre station porte-pièce. Le dessin de la figure 2 illustre une de ces stations de travail constituée ici par deux mandrins 600 porte-pièce.

Dans cette application particulière, le dispositif de protection D des organes d'entraînement de l'organe mobile O est remarquable en ce que ladite cabine 300 mobile selon l'axe Z s'associe pour chaque station de travail à des parois de séparation verticales transversales fixes 700 aménagées d'une fenêtre d'usinage 710 par laquelle l'outil C entraîné en rotation en bout d'organe mobile O vient se mettre en contact avec la pièce à usiner.

En outre, les formes des parois de contact entre la cabine 300 et la ou les parois de séparation 700 s'adaptent de façon à ce que le jeu soit minimum lors du mouvement de la cabine selon l'axe Z. En effet, la fenêtre d'usinage 710 ménagée dans la paroi de séparation 700 s'ouvre sur la zone d'usinage P2 et il est donc particulièrement important que le jeu entre les différentes parois en contact soit minimal afin d'éviter autant que possible que les copeaux résultant de l'usinage ne s'intercalent entre les parois en vis-à-vis.

Selon une autre application particulière non illustrée, la machine-outil d'usinage comporte un deuxième organemobile porte-outil venant en vis-à-vis avec le premier afin de réaliser sur la même station de travail ou sur une station de travail différente, les opérations d'usinage. Ce nouvel organe mobile est avantageusement muni d'un dispositif de protection conforme à l'invention et sa cabine vient en contact avec lesdites parois verticales de séparation.

Comme illustrées, pour des raisons d'encombrement et d'accessibilité, les parois de séparation 700 adoptent un profil particulier sous la forme d'un coude au-dessous des mandrins 600. Ce coude est repris par la paroi de contact de la cabine 300 avec la paroi de séparation 700 afin de minimiser autant que possible l'espace permettant le déplacement de l'ensemble formé par le dispositif de protection D avec l'organe mobile O selon l'axe Z entre les deux parois de séparation 700.

En outre, la demanderesse utilise cette caractéristique pour que, lors de son déplacement selon l'axe Z, la cabine 300 du dispositif de protection D ferme la fenêtre d'usinage 710 ménagée dans la paroi de séparation 700.

Selon une autre caractéristique particulièrement avantageuse de l'invention, le volume défini par une paroi de fond constituée par la structure télescopique 400 et par les deux parois de séparation 700 et au moins une cabine 300 glissant sur les deux parois de séparation 700 ne comporte pas de paroi de toit. Cette caractéristique permet de garder la possibilité d'un changement d'outil C par le haut de la machine-outil, seule possibilité restante de changement d'outil dans une machine-outil adoptant deux stations de travail de part et d'autre d'un ou de deux organes mobiles avec un outil entraîné C en rotation à leur extrémité.

On comprend quele dispositif de protection qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention, tel que décrit dans les revendications.

Ainsi, par exemple, la cabine pourra adopter un rebord supérieur qui tout en laissant la possibilité d'un changement d'outil C par le haut permettra de mieux protéger de la projection des copeaux l'ensemble cinématique formé par le disque 200 avec le tablier 100 coulissant dessus.

## Revendications

1. Dispositif de protection (D) des moyens d'entraînement d'un organe mobile (O) contre la projection des copeaux d'une machine-outil d'usinage comportant une zone d'entraînement (P1) et une zone d'usinage (P2) du type de celui définissant une paroi de protection qui, solidaire de l'organe mobile (O) et traversée par ce dernier, sépare la zone d'entraînement (P1) de la zone d'usinage (P2), **CARACTÉRISE PAR LE FAIT QU**'il est constitué par un tablier (100) solidaire de la partie traversante de l'organe mobile (O) et se déplaçant en libre translation sur un disque (200) en libre rotation par rapport à une cabine (300) et dont l'axe de rotation (A) est décalé par rapport à l'axe de déplacement (B) dudit organe mobile (O) pour lequel sont ménagées :
- dans le disque (200), une première fenêtre de déplacement (210),
- et dans la cabine (300) , une deuxième fenêtre de déplacement (310),
les deux fenêtres de déplacement (210 et 310) étant disposées l'une par rapport à l'autre de telle façon que le déplacement de l'organe mobile (O) dans ladite deuxième fenêtre (310)selon un plan perpendiculaire à l'axe de rotation (A) du disque (200), provoque simultanément le coulissement dudit tablier (100) sur le disque (200) et la rotation de ce dernier, de sorte que ledit déplacement en translation du tablier (100) et la rotation du disque (200) obturent l'ouverture des deux fenêtres de déplacement (210 et 310).

2. Dispositif (D) selon la revendication 1, **CARACTÉRISÉ PAR LE FAIT QUE** le susdit disque (200) est guidé en rotation au moyen de galets (220), dont les axes de rotation sont parallèles à l'axe de rotation (A) dudit disque (200) et solidaires à la cabine (300).

3. Dispositif (D) selon la revendication 1, **CARACTÉRISÉ PAR LE FAIT QUE** ledit disque (200) est aménagé d'une rainure (230) d'une largeur telle qu'elle accueille le tablier (100), les flans de ladite rainure (230) venant guider le tablier (100), ledit disque (200) comportant des moyens assurant le maintien dudit tablier (100) dans ladite rainure (230), le diamètre dudit disque (200) définissant les fins de courses du tablier (100).

4. Dispositif (D) selon la revendication 1, du type de celui dans lequel l'organe mobile (O) est mobile sur deux axes (X et Z), **CARACTÉRISÉ PAR LE FAIT QUE** l'ensemble constitué par l'organe mobile (O) et le dispositif de protection (D) sont solidaires cinématiquement selon un premier axe de déplacement (Z), **ET PAR LE FAIT QUE** seul l'organe mobile (O) se déplace selon le deuxième axe de déplacement (X) par rapport à la cabine (300) actionnant par ce mouvement le dispositif de protection (D).

5. Dispositif (D) selon la revendication 4, **CARACTÉRISÉ PAR LE FAIT QUE** les moyens de guidage de l'ensemble constitué par l'organe mobile (O) et par le dispositif de protection (D) sont protégés par une structure télescopique (400) formant des parois de toit dont le faîte est parallèle à l'axe de déplacement (Z) dudit ensemble.

6. Dispositif (D) selon la revendication 5, **CARACTÉRISÉ PAR LE FAIT QU**'au moins un module racleur (500) assurant l'évacuation des copeaux déposés sur la structure télescopique (400) est lié aux mouvements de déplacement en translation (selon l'axe X) de l'organe mobile (O), perpendiculaires aux mouvements de translation (selon l'axe Z) de l'ensemble du dispositif de protection (D) de façon à entraîner les copeaux sur les pentes du toit formé par ladite structure télescopique (400).

7. Dispositif de protection selon la revendication 6, **CARACTÉRISÉ PAR LE FAIT QU'**il comporte deux modules racleurs (500) disposés de part et d'autre du plan de symétrie passant par le faîte de ladite structure télescopique en toit (400) dont une première extrémité est en contact avec cette dernière (400) et dont une deuxième extrémité est montée pivotante par rapport à une platine (510) fixée à l'organe mobile (O) de façon à ce que le poids de chaque module racleur (500) maintienne constant le contact de ce dernier avec la pente du toit du côté de laquelle il est situé et de façon à ce que le module racleur (500) s'adapte à la pente du toit (400) quelle que soit la course de l'organe mobile (O) et/ou de l'ensemble constitue par l'organe mobile (0) avec le dispositif de protection (D) qui fait évolue= la structure télescopique (400) en réalisant une translation (selon l'axe Z).

8. Poste d'usinage du type de celui comportant au moins un organe mobile (O) porte-outil (C) se déplaçant sur deux axes perpendiculaires (X et Z) et situé entre deux stations porte-pièce assurant l'entraînement en rotation et/ou la tenue de deux pièces disposées parallèlement en amont et en aval de l'organe mobile (O), de telle sorte que l'outil (C) entraîné en rotation par l'organe mobile (O) suive un mouvement en translation en va-et-vient (axe X) d'une station porte-pièce à une autre station porte-pièce, **CARACTERISE PAR LE FAIT QUE** ladite cabine (300) mobile (selon l'axe Z) s'associe pour chaque station de travail à des parois de séparation verticales transversales fixes (700) aménagées d'une fenêtre d'usinage (710) par laquelle l'outil (C) entraîné en rotation en bout d'organe mobile (O) vient se mettre en contact avec la pièce à usiner, et qu'il comprend un dispositif selon les revendications 1 à 4.

9. Poste d'usinage selon la revendication 8, **CARACTÉRISÉ PAR LE FAIT QUE** le volume défini par une paroi de fond constituée par la structure télescopique (400) et par les deux parois de séparation (700 )et au moins une cabine (300) glissant sur les deux parois de séparation (700) ne comporte pas de paroi de toit

10. Poste d'usinage selon revendication 8, **CARACTÉRISÉ PAR LE FAIT QUE** ladite cabine (300) ouvre ou referme dans son déplacement (axe Z), la fenêtre d'usinage (710) ménagée dans la paroi de séparation (700) sur laquelle elle glisse.

## Patentansprüche

1. Schutzvorrichtung (D) für Antriebsmittel eines beweglichen Organs (0) gegen das Herausschleudern von Spänen einer spanenden Werkzeugmaschine, umfassend einen Antriebsbereich (P1) und einen Bearbeitungsbereich (P2), von dem Typ, der eine Schutzwand definiert, die, mit dem beweglichen Organ (0) fest verbunden und von dem Letztgenannten durchquert, den Antriebsbereich (P1) vom Bearbeitungsbereich (P2) trennt, **dadurch gekennzeichnet, dass** sie durch eine Schürze (100) gebildet wird, die mit dem durchquerenden Teil des beweglichen Organs (O) fest verbunden ist und sich in freier Translation auf einer Scheibe (200) bewegt, die sich in Bezug auf eine Kabine (300) frei dreht und deren Drehachse (A) in Bezug auf die Bewegungsachse (B) des beweglichen Organs (O) verschoben ist, für das folgendes gebildet ist:
- in der Scheibe (200) ein erstes Bewegungsfenster (210),
- und in der Kabine (300) ein zweites Bewegungsfenster (310),
wobei die beiden Bewegungsfenster (210 und 310) in Bezug zueinander derart angeordnet sind, dass die Bewegung des beweglichen Organs (O) in dem zweiten Fenster (310) in einer Ebene, die senkrecht zur Drehachse (A) der Scheibe (200) ist, gleichzeitig das Gleiten der Schürze (100) auf der Scheibe (200) und die Drehung der Letztgenannten hervorruft, derart, dass die Translationsbewegung der Schürze (100) und die Drehung der Scheibe (200) die Öffnung der beiden Bewegungsfenster (210 und 310) verschließen.

2. Vorrichtung (D) nach Anspruch 1, **dadurch gekennzeichnet, dass** die oben genannte Scheibe (200) in ihrer Drehung durch Rollen (220) geführt wird, deren Drehachsen parallel zur Drehachse (A) der Scheibe (200) und mit der Kabine (300) fest verbunden sind.

3. Vorrichtung (D) nach Anspruch 1, **dadurch gekennzeichnet, dass** die Scheibe (200) mit einer Rille (230) versehen ist, deren Breite derart ist, dass sie die Schürze (100) aufnimmt, wobei die Flanken dieser Rille (230) die Schürze (100) führen, wobei die Scheibe (200) Mittel umfasst, die den Halt der Schürze (100) in der Rille (230) gewährleisten und wobei der Durchmesser der Scheibe (200) die Enden der Läufe der Schürze (100) definiert.

4. Vorrichtung (D) nach Anspruch 1, von dem Typ, bei dem das bewegliche Organ (0) entlang von zwei Achsen (X und Z) beweglich ist, **dadurch gekennzeichnet, dass** die Einheit, die durch das bewegliche Organ (O) und die Schutzvorrichtung (D) gebildet wird, in einer ersten Bewegungsachse (Z) kinematisch fest verbunden ist, und dass sich nur das bewegliche Organ (O) in der zweiten Bewegungsachse (X) in Bezug auf die Kabine (300) bewegt, wobei es durch diese Bewegung die Schutzvorrichtung (D) betätigt.

5. Vorrichtung (D) nach Anspruch 4, **dadurch gekennzeichnet, dass** die Mittel zur Führung der Einheit, die durch das bewegliche Organ (0) und durch die Schutzvorrichtung (D) gebildet wird, durch eine teleskopische Struktur (400) geschützt werden, die Dachwände bildet, deren First parallel zur Bewegungsachse (Z) der Einheit ist.

6. Vorrichtung (D) nach Anspruch 5, **dadurch gekennzeichnet, dass** mindestens ein Abstreifmodul (500), das für die Entfernung der auf der teleskopischen Struktur (400) abgelagerten Späne sorgt, mit den Translationsbewegungen (entlang der X-Achse) des beweglichen Organs (O) verbunden ist, die senkrecht zu den Translationsbewegungen (entlang der Z-Achse) der gesamten Schutzvorrichtung (D) sind, derart, dass die Späne auf die Schrägen des Daches geführt werden, das durch die teleskopische Struktur (400) gebildet wird.

7. Schutzvorrichtung nach Anspruch 6, **dadurch gekennzeichnet, dass** sie zwei Abstreifmodule (500) umfasst, die zu beiden Seiten der Symmetrieebene angeordnet sind, die durch den First der dachförmigen teleskopischen Struktur (400) verläuft, wobei deren erstes Ende in Kontakt mit der Letztgenannten (400) ist und deren zweites Ende schwenkbar in Bezug auf eine Platte (510) montiert ist, die an dem beweglichen Organ (O) befestigt ist, derart, dass das Gewicht jedes Abstreifmoduls (500) den Kontakt des Letztgenannten mit der Dachschräge der Seite, an der es sich befindet, konstant hält, und derart, dass sich das Abstreifmodul (500) an die Schräge des Daches (400) anpasst, und zwar unabhängig vom Weg des beweglichen Organs (0) und/oder der Einheit, die durch das bewegliche Organ (O) und die Schutzvorrichtung (D) gebildet wird, die die teleskopische Struktur (400) zur Entfaltung bringt, indem sie eine Translation (entlang der Z-Achse) ausführt.

8. Bearbeitungsstation von dem Typ, der mindestens ein bewegliches Organ (0), das ein Werkzeug (C) hält, umfasst, das sich entlang von zwei senkrecht zueinander stehenden Achsen (X und Z) bewegt und das zwischen zwei Werkstückhalter-Stationen angeordnet ist, die für den Drehantrieb und/oder das Halten von zwei Werkstücken sorgt, die parallel stromaufwärts und stromabwärts vom beweglichen Organ (O) angeordnet sind, derart, dass das Werkzeug (C), das durch das bewegliche Organ (0) in eine Drehbewegung versetzt wird, eine hin- und hergehende Translationsbewegung (X-Achse) von einer Werkstückhalter-Station zu einer anderen Werkstückhalter-Station ausführt, **dadurch gekennzeichnet, dass** die (entlang der Z-Achse) bewegliche Kabine (300) sich für jede Arbeitsstation mit fixen transversalen vertikalen Trennwänden (700) verbindet, die mit einem Bearbeitungsfenster (710) versehen sind, durch das das Werkzeug (C), das am Ende des beweglichen Organs (O) in eine Drehbewegung versetzt wird, in Kontakt mit dem zu bearbeitenden Werkstück kommt, und dass sie eine Vorrichtung nach Anspruch 1 bis 4 umfasst.

9. Bearbeitungsstation nach Anspruch 8, **dadurch gekennzeichnet, dass** das Volumen, das definiert wird durch eine Bodenwand, die durch die teleskopische Struktur (400) gebildet wird, durch die beiden Trennwände (700) und mindestens eine Kabine (300), die auf den beiden Trennwänden (700) gleitet, keine Dachwand umfasst.

10. Bearbeitungsstation nach Anspruch 8, **dadurch gekennzeichnet, dass** die Kabine (300) bei ihrer Bewegung (Z-Achse) das Bearbeitungsfenster (710), das in der Trennwand (700) gebildet ist, auf der sie gleitet, öffnet oder wieder schließt.

## Claims

1. Protection device (D) of the driving means of a mobile element (O) against the cuttings projection of a machining machine tool comprising a driving section (P1) and a machining zone (P2) of the type that defines a protection wall that, being interdependent from the mobile element (O) that goes through it, separates the driving section (P1) from the machining section (P2), **CHARACTERIZED BY** THE FACT THAT it is constituted by a plate (100) interdependent from the cross-through part of the mobile element (0) and having a free translational motion on a disk (200) rotating freely with respect to a cabin (300) and the rotation axis (A) of which is shifted with respect to the displacement axis (B) of said mobile element (O) for which are arranged:
- a first displacement window (210) in the disk (200),
- and a second displacement window (310) in the cabin (300),
both displacement windows (210 and 310) being arranged with respect to each other in such a way that the displacement of the mobile element (O) in said second window (310) according to a plane perpendicular to the rotation axis (A) of the disk (200) simultaneously causes the sliding of said plate (100) on the disk (200) and the rotation of the latter, so that said translational displacement of the plate (100) and the rotation of the disk (200) occlude the opening of both displacement windows (210 and 310).

2. Device (D) according to claim 1, **CHARACTERIZED BY** THE FACT THAT the aforesaid disk (200) has its rotation guided by means of rollers (220) that have their rotation axis parallel to the rotation axis (A) of said disk (200) and interdependent from the cabin (300).

3. Device (D) according to claim 1, **CHARACTERIZED BY** THE FACT THAT said disk (200) is provided with a groove (230), the width of which is such that it receives the plate (100), the sides of said groove (230) guiding the plate (100), said disk (200) being provided with means ensuring that said plate (100) remains in said groove (230), the diameter of said disk (200) defining the limits of travel of the plate (100).

4. Device (D) according to claim 1, of the type that the mobile element (O) can move along two axis (X and Z), **CHARACTERIZED BY** THE FACT THAT the set constituted by the mobile element (0) and the protection device (D) are cinematically interdependent along a first displacement axis (Z), and **CHARACTERIZED BY** THE FACT THAT only the mobile element (O) moves along the second displacement axis (X) with respect to the cabin (300) thus driving through this motion the protection device (D).

5. Device (D) according to claim 4, **CHARACTERIZED BY** THE FACT THAT the guiding means of the set constituted by the mobile element (O) and by the protection device (D) are protected by a telescopic structure (400) forming walls having the shape of a roof, the ridge of which is parallel to the displacement axis (Z) of said set.

6. Device (D) according to claim 5, **CHARACTERIZED BY** THE FACT THAT at least one scrapping module (500) providing the evacuation of cuttings deposited on the telescopic structure (400) is linked to the translational displacement motions (along the X axis) of the mobile element (O), perpendicular to the translational motions (along the Z axis) of the whole protection device (D), so as to carry away the cuttings on the slopes of the roof formed by said telescopic structure (400).

7. Protection device (D) according to claim 6, **CHARACTERIZED BY** THE FACT THAT both scrapping modules (500) are arranged on each side of the symmetry plane going through the ridge of said telescopic structure (400) in the shape of a roof, a first end of which is in contact with the latter (400) and the second end of which is mounted in rotation with respect to a top plate (510) fixed to the mobile element (0), so that the weight of each scrapping module (500) allows it to be permanently in contact with the slope of the roof on the side it is located, and in such a manner that the scrapping module (500) adapts itself to the slope of the roof (400), whatever the travel of the mobile element (0) and/or of the set constituted by the mobile element (O) with the protection device (D), which allows the evolution of the telescopic structure (400) through translation (along the Z axis).

8. Machining station of the type that comprising at least one tool holder (C) - mobile element (O) moving according two perpendicular axis (X and Z) and placed between two piece holder - stations ensuring the rotational drive and/or the keeping in place of two pieces arranged in parallel before and after the mobile element (O), so that the tool (C) driven in rotation by the mobile element (O) follows a back-and-forth translational motion (X axis) from one piece holder - station to another piece holder - station, **CHARACTERIZED BY** THE FACT THAT said movable (along the Z axis) cabin (300) is associated for each working station to fixed vertical and transversal separation walls (700) provided with a machining window (710), through which the tool (C) rotationally driven at the end of the mobile element (O) comes in contact with the piece to be machined, and that it includes a device according to claims 1 to 4.

9. Machining station according to claim 8, **CHARACTERIZED BY** THE FACT THAT the volume defined by a bottom wall constituted by the telescopic structure (400) and both separation walls (700) and at least one cabin (300) sliding on both separation walls (700) is not provided a wall serving as a roof.

10. Machining station according to claim 8, **CHARACTERIZED BY** THE FACT THAT said cabin (300) in its displacement (Z axis) opens or closes the machining window (710) provided inside the separation wall (700) on which it slides.
